# EUROPEAN PATENT APPLICATION

(11) **EP 4 206 887 A1**
(43) Date of publication of application: **05.07.2023**
(21) Application number: 21865736.9
(22) Date of filing: 04.08.2021
(51) Int. Cl.: G06F 3/0484

(54) **MULTIMEDIA OBJECT ARRANGEMENT METHOD AND APPARATUS, ELECTRONIC DEVICE, AND STORAGE MEDIUM**

(30) Priority: 14.09.2020 CN 202010962583
(71) Applicant: GUANGDONG OPPO MOBILE TELECOMMUNICATIONS CORP., LTD., Dongguan, Guangdong 523860 (CN)
(72) Inventor: MENG, Wanting, Dongguan, Guangdong 523860 (CN)
(74) Representative: Ipside
(86) International application number: PCT/CN2021/110496
(87) International publication number: WO 2022/052680

(57) **Abstract**

The embodiments of the application relate to the technical field of human-computer interaction, and disclose a method, an apparatus, an electronic device, and a storage media for arranging multimedia object. The method comprises the following steps: receiving a creation operation for creating a target multimedia set, and in response to the creation operation, acquiring information set corresponding to the target multimedia set; displaying at least one related multimedia object matching the information set; in response to the selection operation for the related multimedia object, adding a target multimedia object selected from the related multimedia object to the target multimedia set. The embodiment of the invention can facilitate users to quickly acquire required multimedia object when creating a multimedia set, thereby improving the efficiency of arranging multimedia object.

## Description

This application claims priority to and the benefit of Chinese Patent Application No. 202010962583.1, filed September 14, 2020, and entitled "MULTIMEDIA OBJECT ARRANGEMENT METHOD AND APPARATUS, ELECTRONIC DEVICE, AND STORAGE MEDIUM", the entire disclosures of which are hereby incorporated by reference.

### TECHNICAL FIELD

The present disclosure relates to the field of human-computer interaction, and particular to a multimedia object arrangement method and apparatus, electronic device, and storage medium.

### BACKGROUND

At present, various electronic devices have robust file management functions, which allow users to conveniently arrange multimedia objects (such as images, videos, etc.) according to personal habits to meet various viewing and sharing needs. However, in practice, it is found that when users want to create a new multimedia set (picture set, video folder, etc.), they often need to choose which multimedia object(s) to add from all multimedia objects stored in the electronic device. This is cumbersome and inefficient, and not conducive to improving the efficiency of arranging multimedia objects.

### SUMMARY

Embodiments of the present disclosure provide a method, an apparatus, an electronic device, and a storage medium for arranging multimedia object, which can facilitate users to quickly acquire required multimedia object when creating a multimedia set, thereby improving the efficiency of arranging multimedia object.

In the first aspect, an embodiment of the disclosure discloses a method for arranging multimedia objects, comprising:
receiving a creation operation for creating a target multimedia set, and in response to the creation operation, acquiring an information set corresponding to the target multimedia set;
displaying at least one related multimedia object matching the information set;
in response to a selection operation for the related multimedia object, adding a target multimedia object selected from the related multimedia object to the target multimedia set.

In the second aspect, an embodiment of the disclosure discloses a multimedia object arrangement apparatus, comprising:
a first acquisition unit is configured to receive a creation operation for creating a target multimedia set, and in response to the creation operation, acquire an information set corresponding to the target multimedia set;
a first display unit is configured to display at least one related multimedia object matching the information set; and
an adding unit is configured to in response to a selection operation for the related multimedia object, add a target multimedia object selected from the related multimedia object to the target multimedia set.

In the third aspect,embodiment of the disclosure discloses an electronic device, comprising: a memory and a processor, wherein the memory stores a computer program, and the computer program, when executed by the processor, causes the processor to execute all or part of the steps in the method for arranging multimedia objects disclosed in the first aspect of the embodiments of the disclosure.

In the fourth aspect, an embodiment of the disclosure discloses a computer-readable storage medium having stored instructions that, when executed by a processor , cause the processor to execute the method for arranging multimedia object.

### BRIEF DESCRIPTION OF THE DRAWINGS

In order to explain technical solutions in embodiment of the disclosure more clearly, the drawings needed in the description of the embodiment will be briefly introduced below. It is obvious that the drawings in the following description are only some embodiments of the disclosure. For those of ordinary skill in the art, other drawings can be acquired according to these drawings without paying creative work.
Fig. 1 is a schematic diagram of an application scenario of a multimedia object arranging method of the disclosure.
Fig. 2 is a flowchart of a multimedia object arrangement method of the disclosure.
Fig. 3 is a schematic diagram of a creation interface of a target multimedia set of the disclosure.
Fig. 4A is a schematic diagram of a display interface of a related multimedia object of the disclosure.
Fig. 4B is a schematic diagram of a display interface of another related multimedia object of the disclosure.
Fig. 5 is a schematic diagram of a display interface of another related multimedia object of the disclosure.
Fig. 6 is a schematic diagram of an interface for displaying multimedia data contained in a multimedia data set of the disclosure.
Fig. 7 is a flowchart of another multimedia object arrangement method of the disclosure.
Fig. 8A is a schematic diagram of an interface for marking a target multimedia object of the disclosure.
Fig. 8B is an interface diagram showing the quantity of marked target multimedia objects of the disclosure.
Fig. 9 is a flowchart of another multimedia object arrangement method of the disclosure.
Fig. 10 is a structural schematic diagram of a multimedia object arrangement apparatus of the disclosure.
Fig. 11 is a structural schematic diagram of another arrangement apparatus of multimedia objects of the disclosure.
Fig. 12 is a schematic structural diagram of an electronic device of the disclosure.

### DETAILED DESCRIPTION

Technical solutions for implementations of the disclosure will be described clearly and completely below with reference to the accompanying drawings of implementations of the disclosure. It can be understood that the illustrated embodiment is only part of an embodiment of the disclosure, not all embodiments. Based on the embodiment in the disclosure, all other embodiments acquired by ordinary technical personnel in the art without creative work belong to the scope of protection of the disclosure.

It should be noted that the terms "comprising" and "including" and any modifications thereof in the embodiments of the disclosure are intended to cover nonexclusive inclusion, for example, a process, method, system, product, or process including a series of steps or units. The apparatus is not necessarily limited to those steps or units expressly listed, but may include other steps or units not expressly listed or inherent to the process, method, product, or apparatus. In addition, it can be understood that the terms "first", "second", "third" and "fourth" in embodiments of the present disclosure are used to distinguish different objects, rather than to describe a specific order.

Embodiments of the disclosure provide a method, an apparatus, an electronic device, and a storage medium for arranging multimedia objects, which can facilitate users to quickly acquire required multimedia objects when creating a multimedia set, thereby improving the efficiency of arranging multimedia objects.

The following will be described in detail with reference to specific embodiments.

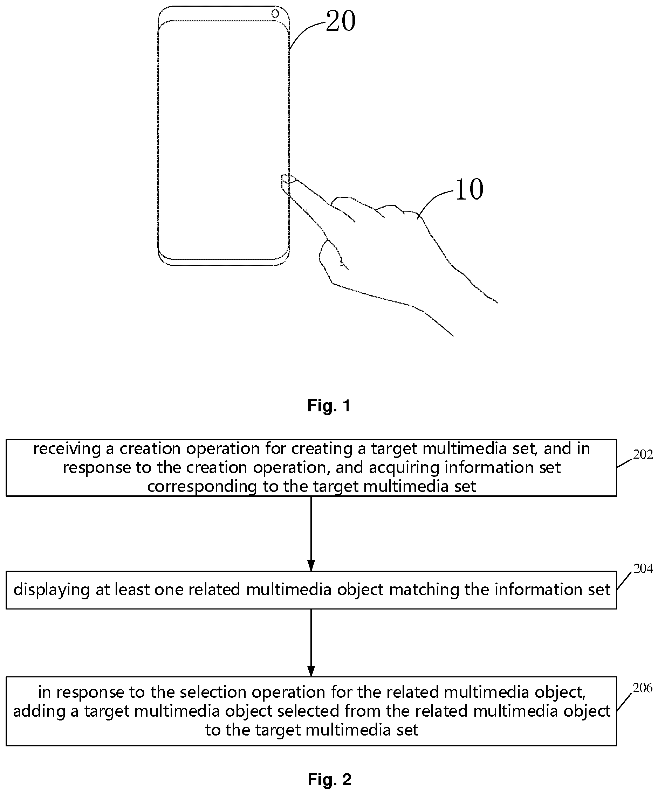

FIG. 1 is a schematic diagram of an application scenario of a multimedia object arranging method of an embodiment of the disclosure. As illustrated in FIG. 1, the method for arranging multimedia objects can be used in a human-computer interaction scenario including a user 10 and an electronic device 20. For example, the electronic device 20 may include various types of devices or systems (such as smartphones, tablet computers, wearable devices, etc.) with multimedia management functions, and the electronic device 20 may be equipped with a corresponding operating system (such as Android system, IOS system, Symbian system, etc.) configured to realize the management of multimedia objects stored or viewed on the electronic device 20. It can be understood that, in order to realize the human-computer interaction between the user 10 and the electronic device 20, multimedia objects can be displayed on the screen of the electronic device 20, and the screen can be a touch screen, so that the user 10 can arrange the multimedia objects displayed through the screen of the electronic device 20 by touching the screen. It should be noted that the electronic device 20 illustrated in FIG. 1 is a smartphone, which is just an example, and does not constitute a limitation on the device type of the electronic device 20 according to embodiments of the present disclosure.

In the related art, when the user 10 wants to create a new multimedia set to arrange the multimedia objects, he needs to select the target multimedia objects which need to be added from all the multimedia objects stored in the electronic device 20. And the electronic device 20 can only simply display all multimedia objects, for example, displaying the abbreviated information (such as thumbnails, file type icons, etc.) of all multimedia objects in chronological order, or displaying previously stored sets (such as photo sets, video folders, etc.). On this basis, the user 10 usually needs to search for the target multimedia objects among the complicated multimedia objects, which is cumbersome and inefficient, and is not conducive to improving the efficiency of arranging the multimedia objects.

However, in this embodiment of the disclosure, the electronic device 20 may receive a creation operation from the user 10 to create a target multimedia set, for example, detect that the user 10 presses a button corresponding to the creation of the target multimedia set on the touch screen of the electronic device 20, and then the device 20 may respond to the creation operation, and acquire an information set (such as set name, set type, etc.) corresponding to the newly created target multimedia set. Further, the electronic device 20 can display at least one related multimedia object matching the information set on the screen, so that the user 10 can quickly select a suitable target multimedia object. For related multimedia objects, the electronic device 20 can filter out the multimedia objects that the user 10 most likely wishes to add from the local storage or cloud storage, and present them to the user 10, saving the time of the user 10 searching by themselves. Finally, the electronic device 20 can also add the target multimedia objects selected from the related multimedia objects to the target multimedia set in response to a selection operation from the user 10 (such as clicking, sliding, etc.) on the related multimedia objects, to efficiently complete the target multimedia set. The creation of the multimedia set and the selection of the target multimedia objects improve the arranging efficiency of the user 10 in arranging the multimedia objects.

FIG. 2 is a schematic flowchart of a method for arranging multimedia objects of an embodiment of the disclosure, and the method can be applied to the electronic device. As illustrated in FIG. 2, the method for arranging multimedia objects may include the following steps.

At block 202, receiving a creation operation for creating a target multimedia set, and in response to the creation operation, acquiring an information set corresponding to the target multimedia set.

In some embodiments of the disclosure, when the electronic device receives a creation operation (such as a touch operation, a voice operation, etc.) for creating a target multimedia set, it can generate an empty set for accommodating multimedia objects in response to the creation operation. The multimedia objects may include one or more of images, videos, audios, and documents. Specifically, the multimedia objects may include files of types such as images, videos, audios, or documents (i.e., multimedia data), and may also include a set of the types of files (i.e., a set of multimedia data). The target multimedia set may only allow the addition of a certain type of multimedia objects, and may also allow the addition of multiple types of multimedia objects, which is not specifically limited to the embodiments of the present disclosure.

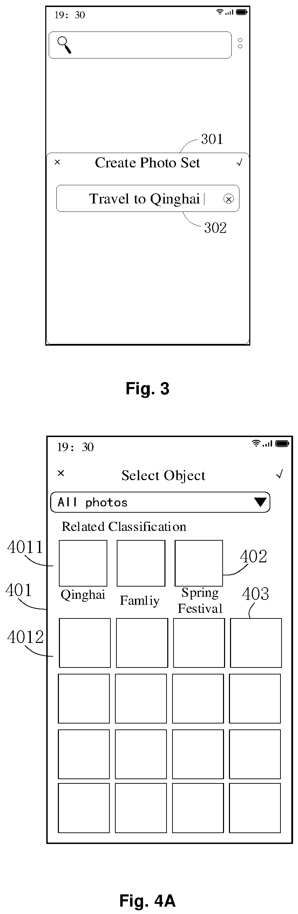

Further, the electronic device may acquire an information set corresponding to the target multimedia set. For example, the information set may include the set name and set creation time (such as creation time, creation date, etc.), set type (such as photo set type, video set type, etc.), user authority (such as only visible to oneself, visible to sharing users, etc.) and so on. FIG. 3 is a schematic diagram of a creation interface of a target multimedia set of an embodiment of the disclosure. When the target multimedia set is created, input box 302 may be displayed on the creation interface 301 for inputting the set name; after the user inputs the set name in the input box 302 and confirms it, the set name can be used as the information set of the target multimedia set.

In another embodiment, after the target multimedia set is created, the set creation time of the target multimedia set can also be acquired, and the set creation time can be used as the information set for adding the multimedia objects matching the set creation time (such as the multimedia objects whose creation time is near the creation time of the set, the creation date is the same as the creation time of the set, etc.) to the target multimedia set. Optionally, it is also possible to acquire the multimedia type defined and added by the target multimedia set, so that the set type can be used as the information set, for example, when the limited multimedia type is a video type, only the multimedia objects of the video type can be added to the target multimedia for forming a video folder. Optionally, user authority information of the target multimedia set can also be acquired, so that the user authority information can be used as the information set to add multimedia objects that can be viewed by the user corresponding to the user authority information to the target multimedia set.

At block 204, displaying at least one related multimedia object matching the information set.

In an embodiment of the disclosure, after the target multimedia set is created, the embodiment of the disclosure can preferentially display the related multimedia objects that match the information set corresponding to the target multimedia set, which is different from the related art that often directly displays all the multimedia objects. Therefore, it is convenient for the user to quickly acquire the target multimedia objects most likely to be acquired. The related multimedia objects include related multimedia data and/or related multimedia data sets, and the like.

Optionally, after acquiring the set name of the target multimedia set as information set corresponding to the target multimedia set, the electronic device may identify key information in the set name, and the key information may be theme key information. For example, theme key information may include the place, person, time, objects, event, multimedia type, etc. corresponding to the set name. For example, when the set name is "Travel to Qinghai", the electronic device can recognize the location word "Qinghai" in the set name and use it as theme key information of the target multimedia set. As another example, when the set name is "family", the electronic device can recognize the character word "family" in the set name, and use it as theme key information. It can be understood that the quantity of the theme key information can be one or more. For example, when the set name is "A family's Spring Festival trip to Qinghai", the electronic device can simultaneously identify the character words "family", The temporal word "Spring Festival" and the location word "Qinghai" are used as theme key information of the target multimedia set. By implementing the method, theme key information of the target multimedia set created by the user can be accurately analyzed, so that the multimedia objects can be filtered according to theme key information, which is beneficial to quickly acquire the target multimedia objects suitable for adding to the target multimedia set.

After acquiring theme key information, the electronic device may acquire multimedia objects matching theme key information, wherein the matched multimedia objects may include matched multimedia data (such as files of types such as images, videos, audios or documents) and /or a matched set of multimedia data (e.g., a set of the types of files), so that the electronic device can display the multimedia data matching theme key information and/or the multimedia data set matching theme key information.

Each multimedia object may correspond to at least one tag information, and when the tag information of the multimedia objects matches theme key information, it may be regarded as a multimedia object matching theme key information. For example, the tag information may include the location, person, time, objects, event, multimedia type, etc. corresponding to the multimedia objects. Thus, a classification like theme key information may be used to improve the matching accuracy. In some embodiments, the tag information of the multimedia objects may be generated when the multimedia objects are created or acquired. For example, for the captured image, its captured location, captured time, color type (such as color image, grayscale image, etc.) can be used as the tag information of the image; for the document created by the user, its creation time, document format (such as doc file, txt file, etc.), document size and so on can be used as the tag information of the document. In other embodiments, the tag information of the multimedia objects can also be acquired by manually tagging or artificially tagging the multimedia objects. For the latter, taking an image-type multimedia object as an example, image feature matching, image semantic segmentation and other techniques may be used.

It can be understood that, when the electronic device acquires a multimedia data set matching theme key information, if the quantity of theme key information is one, it can only acquire one matching multimedia data set, and can also acquire a plurality of matching multimedia data sets.; If the quantity of theme key information is N (N is a positive integer greater than 1), N matching multimedia data sets can be acquired, and the N theme key information can be in one-to-one correspondence with N matching multimedia data sets.

Optionally, when the set creation time of the target multimedia set is acquired as the information set corresponding to the target multimedia set, the electronic device may also acquire the multimedia objects matching the set attributes by a method like thetheme key information described above. In some embodiments, the time when the set is created can be acquired as the information set, to add a multimedia object matching the creation time of the set to the target multimedia set. For example, the user can first specify a time threshold (such as 12 hours, 24 hours, etc.), and when creating a target multimedia set at a certain time, the time range with the difference from the time when the set is created is less than the time threshold can be identified as time key information, and then the multimedia data acquired before the set creation moment and the acquisition time belongs to the time range can be displayed as a related multimedia objects, so as to save all photos and videos acquired within a certain period of time separately in the target multimedia set after selection. In some embodiments, the creation date of the set can also be acquired as the information set, for adding multimedia objects matching the creation date of the set to the target multimedia set. For example, if the creation date of the set is October 7th, the multimedia data created on dates close to the date can be acquired, such as photos and videos taken from October 1st to October 7th (that is, the time range from October 1st to October 7th is used as the corresponding time key information); the holidays (such as National Day, Mid-Autumn Festival, etc.) corresponding to the date can also be identified as time key information, and the multimedia data created on the holiday in previous years can be acquired as related multimedia objects to display.

Optionally, when the set type of the target multimedia set is acquired as the information set, the multimedia type corresponding to the set type may be directly used as the key information. For example, if the set is defined as a video folder, then by identifying the multimedia type added by the set definition, that is the video type, video files (such as mp4 files, flv files, etc.) in the electronic device can be acquired and displayed as related multimedia objects.

Optionally, when the user authority of the target multimedia set is acquired as the information set, the user tag therein may also be identified as key information. In some embodiments, the group of authorized users available for sharing in the set may be acquired as an information set, and used for adding multimedia objects matching the users in the group of authorized users to the target multimedia folder. For example, if the user authority of the set is "only visible to the family group", that is, the "family group" is the authorized user group of the set, then by identifying the user tag "family" in it, the multimedia objects matching "family" can be acquired (such as family photos, etc.) for display. For another example, if the user authority of the set is "visible only to oneself", that is, the authorized users are grouped into users themselves, then by identifying the user tag "self" in the set, the matched multimedia objects (such as self-portrait images, private documents, etc.) can be acquired and as the related multimedia objects to be displayed.

As an optional embodiment, when the electronic device acquires the multimedia data set matching the key information, it may first search for the multimedia data matching the key information, and then classify the matching multimedia data according to the classification rules, and then generate a classifying and/or arranging multimedia data set. For example, the classification rules may comprise locations, persons, times, objects, events, multimedia types, etc. corresponding to the multimedia objects.

For example, when recognizing that theme key information in the set name of the target multimedia set is the location word "Qinghai", the electronic device can search for multimedia data with tag information "Qinghai" from the multimedia data stored locally or in the cloud. The multimedia data may include images with the captured location "Qinghai", songs with "Qinghai" in the lyrics, etc., and then the searched multimedia data may be classified according to the multimedia type. Further, taking the multimedia data of the image type as an example, when the key theme information is the location word "Qinghai", the electronic device can search for an image whose captured location is "Qinghai", an image marked as "Qinghai people", an image identified as "Qinghai landmarks" by artificial intelligence, etc., and then the searched images can be classified according to classification rules such as landscape images, human images, and objects images. After the classification, at least one multimedia data set can be acquired, so that the electronic device can quickly search for multimedia data that meets the user's needs from the scattered multimedia data, and classify the multimedia data to form a set and present it to the user, which may save the time for user to search by himself.

Optionally, under the classification rules, the electronic device may also sort the searched multimedia data, to regularly display the searched multimedia data. For example, it can be sorted in descending order of the degree of similarity with the theme key information, and the degree of similarity can be calculated according to the quantity of tag information matched with each multimedia data, so that the multimedia data with a higher degree of similarity can be preferentially displayed. For another example, the multimedia data can be sorted from back to front according to the acquisition time of the multimedia data, so that the multimedia data whose acquisition time is closer to the set creation time can be preferentially displayed.

Optionally, the multimedia data set acquired may also be a classified set in the electronic device. Still taking the multimedia data that only searches for image types as an example, in one embodiment, when the electronic device stores the captured images, it can classify and store the captured images into different geographic locations sets according to the geographic locations at which the images were captured, such as "Beijing" Atlas, "Qinghai" Atlas, "Sanya" Atlas, etc. Then, when theme key information of the acquired target multimedia set is the location word "Qinghai", the matching "Qinghai" atlas can be acquired and displayed directly to the user as a matched multimedia data set.

After acquiring the matched set of multimedia data, the electronic device can display it. Referring to FIG. 4A, in one embodiment, the display interface 401 on the screen of the electronic device may be divided into a first area 4011 and a second area 4012, and a common boundary may be set between the first area 4011 and the second area 4012 (not shown). After the electronic device acquires one or more multimedia data sets 402, the matching multimedia data sets 402 may be displayed in the first area 4011, and other multimedia data 403 may be displayed in the second area 4012. The other multimedia data 403 may include other multimedia data not included in the matching multimedia data set 402. For example, the matching multimedia data set 402 may be set with a corresponding set identifier, and the set identifier may include a thumbnail of any multimedia data in the multimedia data set 402, and may also include tag information of the multimedia data set 402, so that the multimedia data set 402 can be illustrated by displaying the set identifier of the multimedia data set 4020 in the first area 4011, to save the display space of the first area 4011. For the other multimedia data 403, it can be displayed in the second area 4012 according to the default arranging (such as arranging by creation time, arranging by data size, etc.), to facilitate the user to select appropriate multimedia data according to the traditional search method.

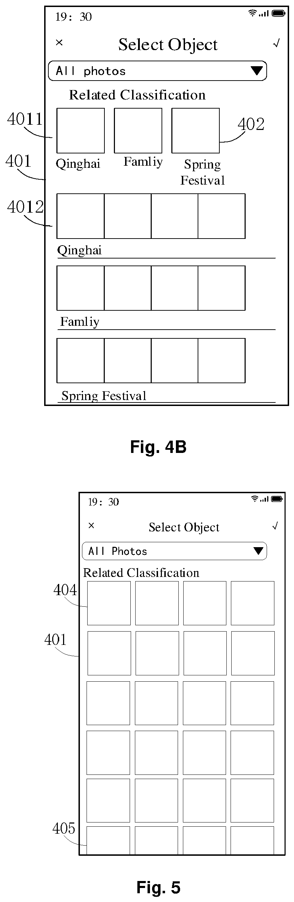

Referring to FIG. 4B , in another embodiment, the second area 4012 may be divided into multiple sub-areas, and the multiple sub-areas may be used to display preview images of multiple multimedia data sets 402 respectively, so that the user can be directly informed the multimedia data included in the matching multimedia data set 402 by means of preview, which is beneficial to save the user's steps of expanding the multimedia data set 402 and improve the efficiency of the user to select the desired multimedia data therefrom.

It can be understood that the first area 4011 and the second area 4012 in FIG. 4A and FIG. 4B are arranged vertically, which is just an example, and in some embodiments, the first area 4011 and the second area 4012 can also be horizontally arranged arrange to adapt to the screen size of different electronic devices and improve the user experience.

After acquiring the matched multimedia data, the electronic device can also directly display it. Referring to FIG. 5, in an embodiment, after the electronic device acquires the multimedia data 404 matching the key information, it can be sorted by default in the display interface 401 on the screen of the electronic device (for example, according to the degree of similarity from high to low sort, sort by creation time, etc.) for easy viewing and selection by the user. It can be understood that other multimedia data 405 that do not match the key information may be displayed immediately after the matched multimedia data 404.

At block 206, in response to a selection operation for the related multimedia object, adding a target multimedia object selected from the related multimedia object to the target multimedia set.

For example, the selection operation may include a click operation, a slide operation, a long press operation, and the like. The electronic device may directly add the selected target multimedia object to the target multimedia set in response to a selection operation on one or more related multimedia objects, wherein the related multimedia objects may include related multimedia data and/or related multimedia data sets.

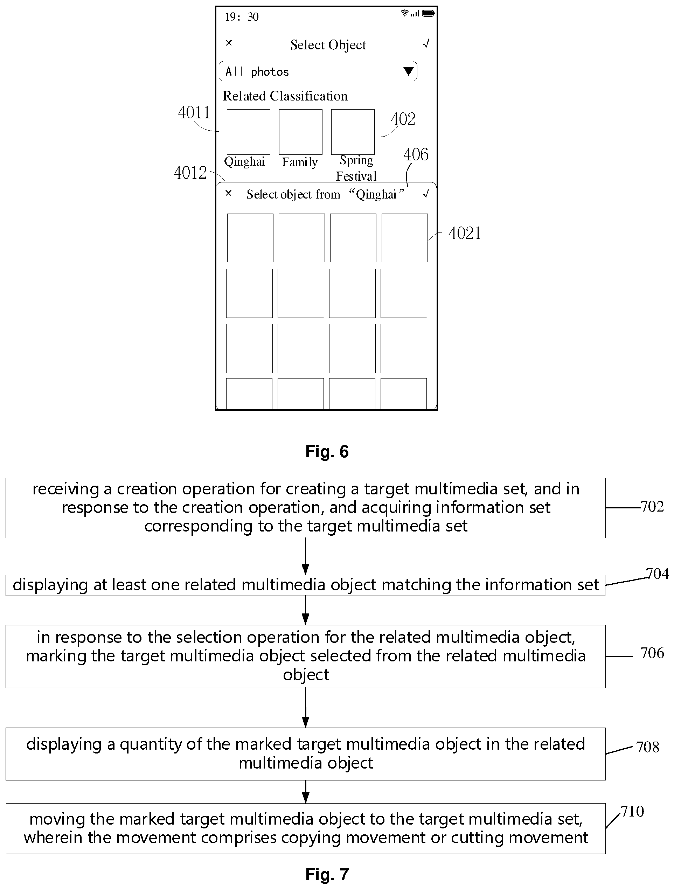

In an embodiment, referring to FIG. 6, when the related multimedia objects are a multimedia data set 402 matching the key information, the multimedia data set 402 is displayed in the first area 4011 of the display interface 401. In this case, the electronic device can display the multimedia data included in the multimedia data set 402 corresponding to the display operation in response to a display operation (such as clicking, sliding, etc.) for any multimedia data set 402 displayed in the first area 4011. Optionally, the multimedia data can be displayed in a selection interface 406 superimposed on the display interface 401, thereby producing eye-catching visual effects, and it is convenient for the user to select the appropriate multimedia data 4021 in the selection interface 406. Optionally, the selection interface 406 can be a suspension interface, and the position of the selection interface 406 relative to the display interface 401 can be adjusted through a position adjustment operation (such as dragging), and the size of the selection interface 406 can be adjusted through a boundary adjustment operation (such as dragging the boundary), so as to facilitate personalized adjustment of the display position and display quantity of the multimedia data 4021, which is beneficial to adapt to the size of different screens and the needs of different users. Optionally, the selection interface can be superimposed on the second area 4012 of the display interface 401 by default, to avoid covering the multimedia data set 402 displayed in the first area 4011, and it is convenient for the user to view and switch to another matching multimedia data set 402 at any time. On this basis, the electronic device may, in response to the selection operation for the displayed multimedia data 4012, add the multimedia data 4012 selected by the selection operation to the target multimedia set as a target multimedia object, to complete the creation of the target multimedia set.

By implementing the method described in the above embodiments, the related multimedia objects matching the information set can be screened out and displayed to the user according to the information set of the target multimedia set created by the user. Accordingly, the user can quickly acquire the required multimedia objects to add to the target multimedia set, without having to search all multimedia objects by the user, making it efficient and convenient to create a new set, which is beneficial for users to quickly complete the creation of the target multimedia set and the selection of target multimedia objects, and greatly improves the multimedia objects finishing efficiency.

FIG. 7 is a schematic flowchart of another method for arranging multimedia objects of an embodiment of the disclosure, and the method can be applied to the electronic device. As illustrated in FIG. 7, the method for arranging multimedia objects may include the following operations.

At block 702, receiving a creation operation for creating a target multimedia set, and in response to the creation operation, acquiring an information set corresponding to the target multimedia set.

At block 704, displaying at least one related multimedia object matching the information set.

Wherein, the block 702 and the block 704 are like the block 202 and the block 204, and are not repeated here.

At block 706, in response to a selection operation for the related multimedia object, marking the target multimedia object selected from the related multimedia object.

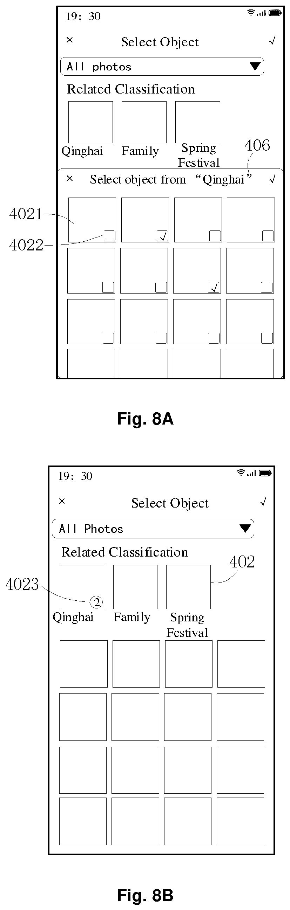

FIG. 8A is a schematic diagram of an interface for marking a target multimedia object of an embodiment of the disclosure. When the related multimedia object is the multimedia data set 402 matching the key information, the interface for marking the target multimedia object may be the selection interface 406 for displaying the multimedia data 4021 for selection. Optionally, a selection control 4022 may be superimposed and displayed on each multimedia data 4021 in the selection interface 406, and the selection control 4022 is used to mark the multimedia data selected by the selection operation. In one embodiment, the selection control 4022 may be a mark box superimposed on a corner of the multimedia data 4021. When the multimedia data 4021 is selected, a selection mark (such as a dot, a slash, a check mark) may be displayed on the mark box. In another embodiment, the selection control 4022 may be a mask superimposed and displayed on the multimedia data 4021. When the multimedia data 4021 is selected, the mask may be highlighted (for example, highlighted, dimmed, etc.), so that the selected and unselected multimedia data can be distinguished, which is beneficial to remind the user to pay attention.

At block 708, displaying a quantity of the marked target multimedia object in the related multimedia object.

FIG. 8B is a schematic diagram of an interface for displaying the quantity of marked target multimedia objects of an embodiment of the disclosure. When the related multimedia object is the multimedia data set 402 matching the key information, a count control 4023 may be displayed on the multimedia data set 402, and a set identifier of the multimedia data set (for example, the thumbnail of any multimedia data in the multimedia data set 402) may be displayed. Optionally, the count control 4023 can display the quantity of marked multimedia data 4021 in real time when the multimedia data 4021 in the multimedia data set 402 is marked. After finishing selecting all the multimedia data 4021 in the multimedia data set 402 and exiting the selection interface 406, the count control 4023 may count the total number of marked multimedia data 4021 which to be displayed. By displaying the quantity of marked target multimedia objects, the selection of the target multimedia objects can be timely fed back, which is beneficial for the user to accurately know the selection progress in the process of selecting the target multimedia objects, and enhances the orderliness of creating the target multimedia set.

At block 710, moving the marked target multimedia object to the target multimedia set, wherein the movement comprises copying movement or cutting movement.

Specifically, after marking the target multimedia object, the electronic device may detect an end selection operation of the user, and the end selection operation may include a touch operation, a voice operation, and the like. After detecting the end selection operation, the electronic device may move the marked target multimedia object to the target multimedia set by copying or cutting. The default movement method can be preset as cut movement, or the user can be asked to determine the movement method before moving, for example, the user can be asked by a pop-up window, or the movement method option can be permanently displayed on the mark page for the user to choose.

As an optional embodiment, after moving the marked target multimedia object to the target multimedia set, the electronic device can also detect whether there are duplicate multimedia objects in the target multimedia set, and if so, it can keep any duplicate multimedia objects and delete other duplicate multimedia objects, to avoid the duplicate multimedia objects occupying storage space and causing unnecessary space waste.

As an optional embodiment, in order to avoid repeated or similar multimedia objects from being displayed and added to the target multimedia set as early as possible, when the electronic device displays at least one related multimedia object matching the information set, it can first detect whether there is a multimedia object with a similarity higher than a threshold in the related multimedia objects matched by the information set. When the electronic device detects at least one group of multimedia objects with a similarity greater than the threshold, it determines the multimedia objects with the highest data quality in each group of multimedia objects with a similarity greater than the threshold, and displays the multimedia objects with the highest data quality and the multimedia with a similarity not greater than the threshold. For example, the similarity can be calculated by means of feature matching and the like. Taking a multimedia object of an image type as an example, each image to be detected can be down-sampled to acquire a detection image of the same size, and then the detection image can be matched with characterize, and a detection image with a degree of similarity greater than the threshold can be determined. For example, the calculation method of the data quality can be set according to the multimedia type of the multimedia objects. Taking the multimedia objects of the image type as an example, the data quality can be set as the resolution. Taking the multimedia objects of the voice type as an example, the data quality can be set to the signal-to-noise ratio. These embodiments can eliminate duplicate or similar multimedia objects when displaying related multimedia objects, which is beneficial to avoid repeated or similar multimedia objects from occupying too much display space. Such features may also prevent users from making repeated selections, and adding repeat or similar multimedia objects to the target multimedia set.

According to embodiments of the present disclosure, selected target multimedia objects can be timely marked and counted, which not only helps the user distinguish selected multimedia objects from unselected multimedia objects, but also helps the user to accurately know the selection progress during the process of selecting target multimedia objects, which enhances the orderliness of creating the target multimedia set. Additionally, automatically deduplicating related multimedia objects avoids manually removing duplicate or similar multimedia objects to the target multimedia set, thereby improving the overall efficiency of arranging multimedia objects.

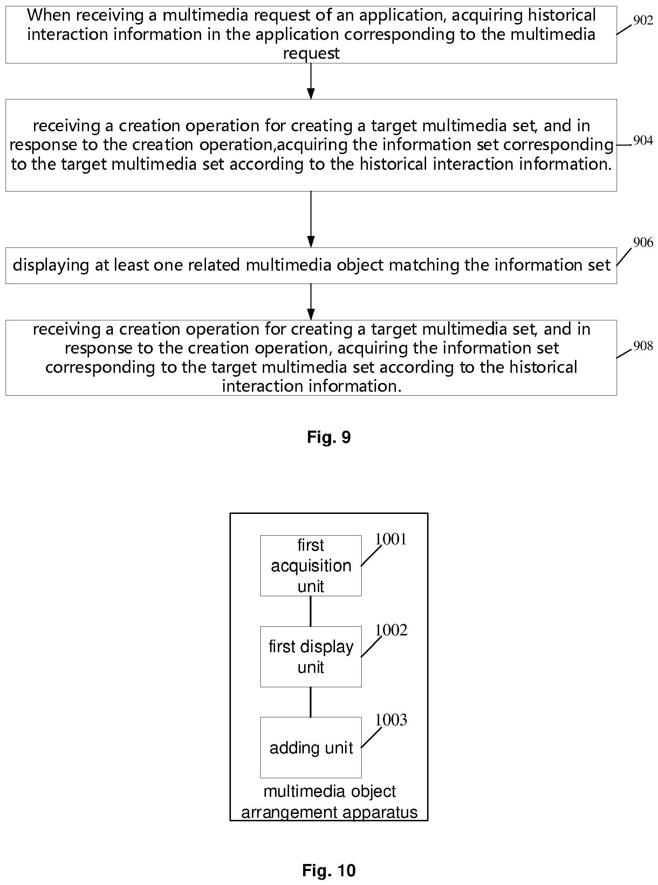

FIG. 9 is a schematic flowchart of another method for arranging multimedia objects of an embodiment of the disclosure, and the method can be applied to the electronic device. As illustrated in FIG. 9, the method for arranging multimedia objects may include the following operations:

At block 902, when receiving a multimedia request of an application, acquiring historical interaction information in the application corresponding to the multimedia request.

In an embodiment of the disclosure, the electronic device may install various types of application programs, and the application program may send a multimedia request to the electronic device when it needs to acquire multimedia objects (such as uploading, forwarding, etc.). For example, when a user uses WeChat to send a circle of friends, one or more images may need to be acquired; and when a user uses Bluetooth face-to-face fast messaging, various multimedia objects may need to be acquired. In order to further acquire the relevant information of the multimedia request sent by the application program, when the electronic device receives the multimedia request of the application program, it can acquire historical interaction data corresponding to the multimedia request through the application program, such as context data, contact data, etc. Therefore, the electronic device can recommend appropriate related multimedia objects for the user to select according to the historical interaction data.

At block 904, receiving a creation operation for creating a target multimedia set, and in response to the creation operation, and acquiring the information set corresponding to the target multimedia set according to the historical interaction information.

The block 904 is like the block 202. It should be noted that when the information set corresponding to the target multimedia set is acquired according to the historical interaction information, a temporary target multimedia set may be created according to the information set. The temporary target multimedia set It can be deleted after responding to the multimedia request.

In one embodiment, when a multimedia request from a social application is received, context data (such as chat records, social access traces, etc.) corresponding to the multimedia request can be acquired, and then the context data can be used as the information set corresponding to the newly created target multimedia set, and the context data is identified to acquire the theme key information (such as location, time, event, etc.).

In another embodiment, when a multimedia request from a file transfer application is received, contact data corresponding to the multimedia request (such as a transfer contact, a transfer address, etc.) can be acquired, and an transmission record corresponding to the contact data can be further acquired, and then the transmission record can be used as the information set corresponding to the temporary target multimedia set established during the continuous transmission, and the corresponding transmission key information (such as transmission file type, transmission file subject, etc.) can be identified from it, so as to facilitate the user resume transmission as soon as possible in the event that transmission of multimedia objects is unexpectedly interrupted.

At block 906, at least one related multimedia object matching the information set is displayed.

Block 906 is similar to block 204. However, it should be noted that when the quantity of the related multimedia objects is multiple, the electronic device can determine the display order according to the degree of matching between the related multimedia objects and the information set, to preferentially display the related multimedia objects that are most likely to satisfy the multimedia request of the application.

As an optional embodiment, the electronic device may acquire tag information of each multimedia object, and the tag information may include the location, person, time, objects, event, multimedia type, etc. The electronic device can be scored according to the degree of matching between the tag information of each multimedia objects and the information set, when the score exceeds the matching threshold (for example, the quantity of similar tag information exceeds the number threshold), the corresponding multimedia objects can be used as a related multimedia object. The multiple related multimedia objects can be sorted according to the score, and then the related multimedia objects can be displayed in the order of matching score from high to low, so as to realize the priority display of the multimedia objects with the highest degree of similarity, and save the time of the user's search for the target multimedia objects as much as possible.

At block 908, in response to a selection operation for a displayed multimedia data, adding the multimedia data selected by the selection operation as a target multimedia object to the target multimedia set.

Wherein, the block 908 is like the block 206, and is not repeated here.

At least one embodiment, the multimedia objects which is the user may wish to acquire can be accurately identified by in response to the multimedia request of the application, and the multimedia objects can be preferentially displayed, which can reduce time for the user search for the target multimedia objects as much as possible and the time for the user to switch from multiple application programs to obtain the multimedia object.

FIG. 10 is a schematic structural diagram of a device for arranging multimedia objects according to an embodiment of the disclosure. The device for arranging multimedia objects can be applied to electronic equipment. As illustrated in FIG. 10, the arrangement apparatus may include a first acquisition unit 1001, a first display unit 1002, and an adding unit 1003.

A first acquisition unit 1001 is configured to receive a creation operation for creating a target multimedia set, and in response to the creation operation, acquire an information set corresponding to the target multimedia set.

Optionally, the creation operation may include a touch operation, a voice operation, or the like. When a target multimedia set is created, it can be an empty set that can be used to hold one or more multimedia objects including images, video, audio, and documents. Specifically, the multimedia object may include files of types such as images, videos, audios, or documents (i.e., multimedia data), and may also include a set of the types of files (i.e., a set of multimedia data).

Optionally, when acquiring an information set corresponding to the target multimedia set, the information set may include set name, set creation time (such as creation time, creation date, etc.), set type (such as set type, video set type, etc.), and user authority (such as only visible to yourself, visible to shared users, etc.).

The first display unit 1002 is configured to display at least one related multimedia object matching the information set.

Optionally, the related multimedia objects may include one or more of images, videos, audios, and documents.

The adding unit 1003 is configured to in response to the selection operation for the related multimedia object, add a target multimedia object selected from the related multimedia object to the target multimedia set.

Optionally, the selection operation may include a click operation, a slide operation, etc., which is not specifically limited in this embodiment of the disclosure. The target multimedia object may include the multimedia data selected by the selection operation.

With the arrangement apparatus disclosed, the related multimedia objects matching the information set can be screened out and displayed to the user according to the information set of the target multimedia set created by the user. The user can thereby quickly acquire the required multimedia objects to add to the target multimedia set, without having to search all multimedia objects by the user. This improves efficiency and convenience to create a new set, which is beneficial for users to quickly complete the creation of the target multimedia set and the selection of target multimedia objects.

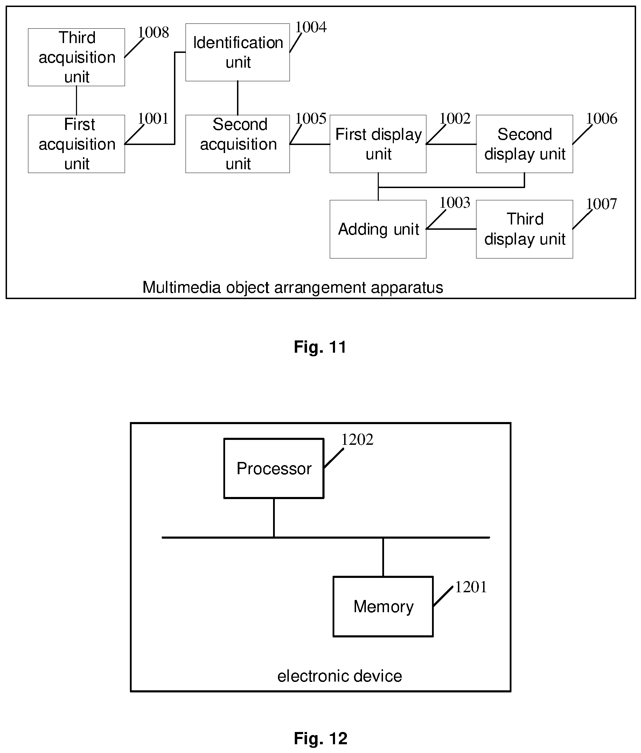

FIG. 11 is a schematic structural diagram of another apparatus for arranging multimedia objects disclosed in an embodiment of the disclosure. The arrangement apparatus illustrated in FIG. 11 is acquired by optimizing the arrangement apparatus illustrated in FIG. 10, and the same can also be applied to electronic equipment. In one embodiment, the information set may include set name, set creation time (such as creation time, creation date, etc.), set type (such as photo set type, video set type, etc.), and user authority (for example, only visible to oneself, share one or more of the user-visible, etc.). The arrangement apparatus illustrated in FIG. 11 may further include an identification unit 1004 and a second acquisition unit 1005.

The identification unit 1004 can be configured to identify key information in the information set, after acquiring the information set corresponding to the target multimedia set

A second acquisition unit 1005 can be configured to acquire a multimedia object matching the key information.

The matched multimedia objects include matched multimedia data and/or matched multimedia data sets.

The first display unit 1002 can be configured to display the multimedia objects matching the key information.

With the arrangement apparatus disclosed in this embodiment, key information of the target multimedia set can be identified according to the information set. This can provide an accurate reference source for acquiring the related multimedia objects, and improve the accuracy of acquiring related multimedia objects. The related multimedia objects satisfying the set attributes are displayed to the user, so that the user can flexibly select desired multimedia data from them.

As an optional embodiment, the second acquisition unit 1005 may include a search sub-unit and a classification sub-unit (not shown).

A search sub-unit can be configured to search for multimedia data matching the key information.

A classification sub-unit can be configured to classify and/or sort the multimedia data according to a classification rule, and generate a classified and/or sorted multimedia data set.

The first display unit 1002 can be used to display the classified and/or sorted multimedia data set, so that multimedia data that meets user needs can be quickly searched from the dispersedly stored multimedia data. The searched multimedia data can be classified and form a set. At the same time, the searched multimedia data can be sorted to display the content in manner that better suits the user's needs first, which saves the user from performing a manual search.

As an optional embodiment, the arrangement apparatus illustrated in FIG. 11 may further include a second display unit 1006. After the first display unit displays at least one related multimedia objects matching the information set, in response to a display operation for the multimedia data set in any related multimedia objects displayed, the second display unit 1006 can display the multimedia data contained in the multimedia data set corresponding to the display operation.

The adding unit may be configured to, in response to a selection operation for displayed multimedia data, add the multimedia data selected by the selection operation as a target multimedia object to the target multimedia set.

As an optional embodiment, the adding unit 1003 may include a mark sub-unit and a movement sub-unit (not shown).

A mark sub-unit can be configured to, in response to the selection operation for the related multimedia objects, mark the target multimedia objects selected from the related multimedia objects.

The movement sub-unit can be configured to, in response to the selection operation for the related multimedia objects, mark the target multimedia objects selected from the related multimedia objects.

In addition, the arrangement apparatus illustrated in FIG. 11 may further include a third display unit 1007, which is configured to display the related multimedia objects after the mark sub-unit marks the target multimedia object selected from the related multimedia objects the quantity of target multimedia objects marked in the object.

According to embodiments of the present disclosure, the selected target multimedia objects can be marked and counted in time, which not only facilitates the user to distinguish selected multimedia objects from unselected multimedia objects, but also facilitates the user to accurately know the selection progress in the process of selecting the target multimedia objects, which enhances the orderliness of creating the target multimedia set.

As an optional embodiment, the first acquisition unit 1001 may be further configured to acquire the information set corresponding to the target multimedia set according to the historical interaction information.

A detection sub-unit can detect whether there is a multimedia objects with a similarity greater than a threshold in the related multimedia objects matched with the information set.

The first display sub-unit can be configured to determine the multimedia objects with the highest data quality in each group of multimedia objects with a similarity greater than the threshold when at least one group of multimedia objects with a similarity greater than the threshold is detected, and display the multimedia objects with the highest data quality and the multimedia with a similarity not greater than the threshold.

According to embodiments of the present disclosure, automatically deduplicating related multimedia objects can avoid manually removing duplicative multimedia objects, thereby improving overall efficiency of arranging multimedia objects.

As an optional embodiment, the first display unit 1002 may further include an arrangement sub-unit and a second display sub-unit (not shown). When the quantity of related multimedia objects matching the information set is multiple, the arrangement sub-unit can be configured to sort the related multimedia objects according to the degree of similarity between the related multimedia objects and the information set.

The second display sub-unit is configured to sort the related multimedia objects according to the degree of similarity between the related multimedia objects and the information set, so that the multimedia objects with the highest degree of similarity can be preferentially displayed, and the user's time to find the target multimedia objects can be saved as much as possible.

As an optional embodiment, the arrangement apparatus illustrated in FIG. 11 may further include a third acquisition unit 1008, and the third acquisition unit 1008 is configured to, configured to, before the first acquisition unit receives a creation operation for creating a target multimedia set, and in response to the creation operation, and acquires information set corresponding to the target multimedia set, when receive a multimedia request of an application, acquire historical interaction information in the application corresponding to the multimedia request.

The first acquisition unit 1001 can be specifically configured to, after the third acquisition unit 1008 acquires the historical interaction information, receive a creation operation of creating a target multimedia set detected after receiving the multimedia request, and in response to the creation operation, according to the historical interaction information acquires information set corresponding to the target multimedia set.

With the arrangement apparatus disclosed in the embodiment, the multimedia objects which is the user may wish to acquire can be accurately identified by in response to the multimedia request of the application, and the multimedia objects can be preferentially displayed, which can reduce time for the user search for the target multimedia objects as much as possible and the time for the user to switch from multiple application programs to obtain the multimedia object.

FIG. 12 is a schematic structural diagram of an electronic device disclosed in an embodiment of the disclosure. As illustrated in Figure 12, the electronic device may include:
A memory 1201 storing executable program code.

A processor 1202 coupled to the memory 1201.

The processor 1202 invokes the executable program code stored in the memory 1201 to execute all or part of the operations in any of the methods for arranging multimedia objects described herein.

In addition, the embodiment of the disclosure further discloses a computer-readable storage medium, which stores a computer program for electronic data exchange, wherein the computer program causes the computer to execute any one of all or part of the operations of the methods for arranging multimedia objects described in the foregoing embodiments.

In addition, the embodiment of the disclosure further discloses a computer program product, when the computer program product runs on a computer, the computer program product enables the computer to execute all or part of the operations in any of the methods for arranging multimedia objects described herein.

It is to be understood that reference throughout the specification to "one embodiment" or "an embodiment" means that a particular feature, structure, or characteristic associated with the embodiment is included in at least one embodiment of the disclosure. Thus, appearances of "in one embodiment" or "in an embodiment" in various places throughout this specification are not necessarily referring to the same embodiment. Furthermore, the specific features, structures or characteristics may be combined in any suitable manner in one or more embodiments. Those having ordinary skill in the art should also know that the embodiments described in the present specification are optional embodiments, and the actions and modules described are not necessarily required by the disclosure.

Those of ordinary skill in the art can understand that all or part of the steps in the various methods of the embodiments can be completed by instructing relevant hardware through a program, and the program can be stored in a computer-readable storage medium, and the storage medium includes a read-only storage medium. Memory (Read-Only Memory, ROM), Random Access Memory (Random Access Memory, RAM), Programmable Read-only Memory (PROM), Erasable Programmable Read Only Memory (Erasable Programmable Read Only Memory, EPROM), One-time Programmable Read-Only Memory (OTPROM), Electronically Erasable Programmable Read-Only Memory (EEPROM), Compact Disc (Compact Disc) Read-Only Memory, CD-ROM) or other optical disk storage, magnetic disk storage, magnetic tape storage, or any other computer-readable medium that can be used to carry or store data.

The method, the apparatus, the electronic device, and the storage media for arranging multimedia object disclosed in the embodiments of the disclosure have been described in detail. The principles and implementations of the disclosure are described with specific examples in this article. It is only used to help understand the method of the disclosure and its core idea; at the same time, for those of ordinary skill in the art, according to the idea of the disclosure, there will be changes in the specific embodiments and application scope. In summary, the contents of this specification should not be construed as limiting the application.

## Claims

1. A method for arranging multimedia object, comprising:
receiving a creation operation for creating a target multimedia set; in response to the creation operation, acquiring an information set corresponding to the target multimedia set;
displaying at least one related multimedia object matching the information set;
in response to a selection operation for the related multimedia object, adding a target multimedia object selected from the related multimedia object to the target multimedia set.

2. The method according to claim 1, wherein the information set includes one or more of a set name, a set creation time, a set type, and user authority;
wherein after acquiring the information set corresponding to the target multimedia set, the method further comprises:
identifying key information in the information set;
acquiring a multimedia object matching the key information;
wherein the displaying the at least one related multimedia object matching the information set comprises:
displaying the multimedia object matching the key information.

3. The method according to claim 2, wherein the acquiring a multimedia object matching the key information, comprises:
searching for multimedia data matching the key information;
classifying and/or sorting the multimedia data according to a classification rule, and generating a classified and/or sorted multimedia data set;
wherein the displaying the multimedia object matching the key information comprises:
displaying the classified and/or sorted multimedia data set.

4. The method according to claim 1, wherein after displaying the at least one related multimedia object matching the information set, the method further comprises:
in response to a display operation for the multimedia data set in any related multimedia object displayed, displaying the multimedia data contained in the multimedia data set corresponding to the display operation.

5. The method according to claim 4, wherein the in response to the selection operation for the at least one related multimedia object, adding the target multimedia object selected from the at least one related multimedia object to the target multimedia set, comprises:
in response to a selection operation for a displayed multimedia data, adding the multimedia data selected by the selection operation as a target multimedia object to the target multimedia set.

6. The method according to claim 1, wherein the in response to the selection operation for the at least one related multimedia object, adding a target multimedia object selected from the at least one related multimedia object to the target multimedia set, comprises:
in response to the selection operation for the at least one related multimedia object, marking the target multimedia object selected from the at least one related multimedia object;
moving the marked target multimedia object to the target multimedia set, wherein the movement comprises copying movement or cutting movement.

7. The method according to claim 6, wherein after marking the target multimedia object selected from the at least one related multimedia object, the method further comprises:
displaying a quantity of the marked target multimedia object in the related multimedia object.

8. The method according to claim 1, wherein displaying at least one related multimedia object matching the information set, comprising:
detecting whether there is a multimedia object with a similarity greater than a threshold in the related multimedia object matching the information set;
when detected at least one group of multimedia objects with a similarity greater than the threshold, determining the multimedia object with the highest data quality in each group of multimedia objects with a similarity greater than the threshold, and displaying the multimedia object with the highest data quality and the multimedia with a similarity not greater than the threshold.

9. The method according to claim 1, wherein a quantity of the at least one related multimedia objects matching the information set is multiple, and the displaying at least one related multimedia object matching the information set, comprises:
sorting the at least one related multimedia objects according to the degree of similarity between the at least one related multimedia objects and the information set;
displaying the at least one related multimedia objects according to descending order of the degree of similarity.

10. The method according to claim 1, wherein, before receiving a creation operation for creating a target multimedia set, and in response to the creation operation, acquiring information set corresponding to the target multimedia set, comprising:
when receiving a multimedia request of an application, acquiring historical interaction information in the application corresponding to the multimedia request; and
wherein the acquiring information set corresponding to the target multimedia set comprises:
acquiring the information set corresponding to the target multimedia set according to the historical interaction information.

11. The method according to claim 1, wherein the at least one related multimedia object includes one or more of images, videos, audios, and documents.

12. A multimedia object arrangement apparatus, comprising:
a first acquisition unit, configured to receive a creation operation for creating a target multimedia set, and in response to the creation operation, acquire an information set corresponding to the target multimedia set;
a first display unit, configured to display at least one related multimedia object matching the information set; and
an adding unit, configured to in response to a selection operation for the at least one related multimedia object, add a target multimedia object selected from the at least one related multimedia object to the target multimedia set.

13. The arrangement apparatus according to claim 12, wherein the information set includes one or more of a set name, a set creation time, a set type, and user authority, and the apparatus further comprises:
an identification unit, configured to identify key information in the information set after acquiring the information set corresponding to the target multimedia set; and
a second acquisition unit, configured to acquire a multimedia object matching the key information; and
wherein the first display unit is further configured to display the multimedia object matching the key information.

14. The arrangement apparatus according to claim 13, wherein the second acquisition unit comprises:
a search sub-unit, configured to search for multimedia data matching the key information; and
a classification sub-unit, configured to classify and/or sort the multimedia data according to a classification rule, and generate a classified and/or sorted multimedia data set; and
wherein the first display unit is further configured to display the classified and/or sorted multimedia data set.

15. The arrangement apparatus according to claim 12, wherein the arrangement apparatus further comprises:
a second display unit configured to, after the first display unit displays at least one related multimedia object matching the information set, in response to a display operation for the multimedia data set in any related multimedia object displayed, display the multimedia data contained in the multimedia data set corresponding to the display operation.

16. The arrangement apparatus according to claim 15, wherein the adding unit is further configured to, in response to a selection operation for a displayed multimedia data, add the multimedia data selected by the selection operation as a target multimedia object to the target multimedia set.

17. The arrangement apparatus according to claim 12, wherein the adding unit comprises:
a mark sub-unit, configured to in response to the selection operation for the related multimedia object, mark the target multimedia object selected from the related multimedia object;
a movement sub-unit, configured to move the marked target multimedia object to the target multimedia set, wherein the movement comprises copying movement or cutting movement.

18. The arrangement apparatus according to claim 17, the apparatus further comprises:
a third display unit, configured to display a quantity of the marked target multimedia object in the related multimedia object.

19. The arrangement apparatus according to claim 12, wherein the first display unit comprises:
a detection sub-unit, configured to detect whether there is a multimedia object with a similarity greater than a threshold in the at least one related multimedia object matching the information set;
wherein the first display sub-unit is configured to when detected at least one group of multimedia objects with a similarity greater than the threshold, determine the multimedia object with the highest data quality in each group of multimedia objects with a similarity greater than the threshold, and display the multimedia object with the highest data quality and the multimedia with a similarity not greater than the threshold.

20. The arrangement apparatus according to claim 12, wherein a quantity of the at least one related multimedia objects matching the information set is multiple, and the first display unit comprises:
an arrangement sub-unit, configured to sort the at least one related multimedia objects according to the degree of similarity between the at least one related multimedia objects and the information set; and
a second display sub-unit, configured to display the at least one related multimedia objects according to descending order of the degree of similarity.

21. The arrangement apparatus according to claim 12, the apparatus further comprises:
a third acquisition unit configured to, before the first acquisition unit receives a creation operation for creating a target multimedia set, and acquires information set corresponding to the target multimedia set in response to the creation operation, when receiving a multimedia request of an application, acquire historical interaction information in the application corresponding to the multimedia request; and
wherein the first acquisition unit is further configured to acquire the information set corresponding to the target multimedia set according to the historical interaction information.

22. The arrangement apparatus according to claim 12, wherein the at least one related multimedia object includes one or more of images, videos, audios, and documents.

23. An electronic device, comprising a memory and a processor, wherein the memory stores a computer program, and the computer program, which when executed by the processor, causes the processor to:
receive a creation operation for creating a target multimedia set, and in response to the creation operation, acquire an information set corresponding to the target multimedia set;
display at least one related multimedia object matching the information set;
in response to a selection operation for the at least one related multimedia object, add a target multimedia object selected from the at least one related multimedia object to the target multimedia set.

24. The electronic device according to claim 23, wherein the information set includes one or more of: a set name, a set creation time, a set type, and user authority; wherein after acquiring the information set corresponding to the target multimedia set, the processor is further caused to:
identify key information in the information set;
acquire a multimedia object matching the key information;
wherein displaying the at least one related multimedia object matching the information set comprises:
displaying the multimedia object matching the key information.

25. The electronic device according to claim 24, wherein acquiring the multimedia object matching the key information comprises:
searching for multimedia data matching the key information;
classifying and/or sorting the multimedia data according to a classification rule, and generating a classified and/or sorted multimedia data set;
wherein displaying the multimedia object matching the key information comprises:
displaying the classified and/or sorted multimedia data set.

26. The electronic device according to claim 23, wherein after displaying the at least one related multimedia object matching the information set, the processor is further caused to:
in response to a display operation for the multimedia data set in any related multimedia object displayed, display the multimedia data contained in the multimedia data set corresponding to the display operation.

27. The electronic device according to claim 26, wherein in response to the selection operation for the at least one related multimedia object, adding the target multimedia object selected from the at least one related multimedia object to the target multimedia set comprises:
in response to the selection operation for a displayed multimedia data, adding the multimedia data selected by the selection operation as a target multimedia object to the target multimedia set.

28. The electronic device according to claim 23, wherein the in response to the selection operation for the at least one related multimedia object, adding the target multimedia object selected from the at least one related multimedia object to the target multimedia set comprises:
in response to the selection operation for the at least one related multimedia object, marking the target multimedia object selected from the at least one related multimedia object;
moving the marked target multimedia object to the target multimedia set, wherein the movement comprises copying movement or cutting movement.

29. The electronic device according to claim 28, wherein after marking the target multimedia object selected from the at least one related multimedia object, the processor is further caused to:
display a quantity of the marked target multimedia object in the at least one related multimedia object.

30. The electronic device according to claim 23, wherein display at least one related multimedia object matching the information set comprises:
detecting whether there is a multimedia object with a similarity greater than a threshold in the at least one related multimedia object matching the information set;
when detected at least one group of multimedia objects with a similarity greater than the threshold, determining the multimedia object with the highest data quality in each group of multimedia objects with a similarity greater than the threshold, and displaying the multimedia object with the highest data quality and the multimedia with a similarity not greater than the threshold.

31. The electronic device according to claim 23, wherein a quantity of the at least one related multimedia objects matching the information set is multiple, and the display at least one related multimedia object matching the information set comprises:
sorting the at least one related multimedia objects according to the degree of similarity between the at least one related multimedia objects and the information set;
displaying the at least one related multimedia objects according to descending order of the degree of similarity.

32. The electronic device according to claim 23, wherein before receiving the creation operation for creating the target multimedia set, and in response to the creation operation, acquiring information set corresponding to the target multimedia set, the processor is further caused to:
when receive a multimedia request of an application, acquire historical interaction information in the application corresponding to the multimedia request;
wherein the acquire information set corresponding to the target multimedia set comprises:
acquire the information set corresponding to the target multimedia set according to the historical interaction information.

33. The electronic device according to claim 23, wherein the at least one related multimedia object includes one or more of images, videos, audios, and documents.

34. A computer-readable storage medium having stored instructions that, when executed by a processor, cause the processor to execute the method for arranging multimedia object according to any claim 1 to 11.
